# EUROPEAN PATENT APPLICATION

(11) **EP 4 554 202 A1**
(43) Date of publication of application: **14.05.2025**
(21) Application number: 23850304.9
(22) Date of filing: 19.07.2023
(51) Int. Cl.: H04N 5/92, H04N 5/77, G06F 16/51, G06F 16/58, G06F 11/30

(54) **ELECTRONIC DEVICE AND METHOD FOR MANAGING PHOTOGRAPHING DATE AND TIME OF IMAGE FILE IN SAME ELECTRONIC DEVICE**

(30) Priority: 05.08.2022 KR 20220097759; 05.09.2022 KR 20220112275
(71) Applicant: Samsung Electronics Co., Ltd., Suwon-si, Gyeonggi-do 16677 (KR)
(72) Inventor: YOON, Kwanghyeok, Suwon-si Gyeonggi-do 16677 (KR); CHOI, Hyoungho, Suwon-si Gyeonggi-do 16677 (KR); SO, Hyeonbin, Suwon-si Gyeonggi-do 16677 (KR); SHIN, Seokhwan, Suwon-si Gyeonggi-do 16677 (KR); HAN, Wonjeong, Suwon-si Gyeonggi-do 16677 (KR); AN, Jinwan, Suwon-si Gyeonggi-do 16677 (KR)
(74) Representative: Appleyard Lees IP LLP
(86) International application number: PCT/KR2023/010367
(87) International publication number: WO 2024/029797

(57) **Abstract**

An electronic device according to an embodiment may include: a memory including a DB for storing a first table in which a unique key value of an image file and photographing date and time information are matched and stored; and a processor. The processor according to an embodiment may be configured to generate, on the basis of identification of a first image file of which metadata is not stored or a second image file of which metadata does not include photographing date and time information, a unique key value for the first image file or the second image file. The processor according to an embodiment may be configured to generate date and time information associated with the first image file or the second image file as photographing date and time information and match the unique key value and the generated photographing and date information and store the same in the first table of the DB.

## Description

### [Technical Field]

The disclosure relates to an electronic device for managing the photographing date and time of an image file having a file format in which metadata is unable to be stored and/or an image file in which metadata that does not include photographing date and time information is stored, and a method for managing the photographing date and time in the electronic device.

### [Background Art]

An electronic device may sort files stored in the electronic device, based on time, and provide the same. The electronic device may provide files by sorting them, based on generation date and time information, or by sorting them, based on photographing date and time information, depending on the type of file.

For example, in the case of image files capable of being sorted based on photographing date and time information, the electronic device may provide a user with image files that are sorted based on photographing date and time information using a database (DB) that manages metadata of image files.

### [Detailed Description of the Invention]

### [Technical Problem]

In the case of an image file having a file format in which metadata is unable to be stored and/or an image file in which metadata that does not include photographing date and time information is stored, the electronic device updates a database (DB) for managing metadata of image files with the last modification (e.g., copying, editing, and/or moving) time of the image file and uses the same as the photographing date and time information of the image file.

Therefore, whenever the image file is modified, the photographing date and time information of the image file changes, and thus the sorting order may change when displaying the image file.

### [Technical Solution]

An electronic device according to an embodiment may include memory including a DB configured to store a first table in which unique key values and photographing date and time information of image files are stored to be matched, and a processor.

The memory according to an embodiment may store instructions that, when executed, cause the processor to generate, based on identifying a first image file in which metadata is not stored or a second image file in which metadata does not include photographing date and time information, a unique key value for the first image file or the second image file.

The memory according to an embodiment may store instructions that, when executed, cause the processor to generate date and time information related to the first image file or the second image file as photographing date and time information, match and store the unique key value with the generated photographing and date information in the first table of the DB. A method for managing photographing date and time of an image file in an electronic device according to an embodiment may include generating, based on identifying a first image file in which metadata is not stored or a second image file in which metadata does not include photographing date and time information, a unique key value for the first image file or the second image file.

The method according to an embodiment may include generating date and time information related to the first image file or the second image file as photographing date and time information.

The method according to an embodiment may include matching and storing the unique key value with the photographing and date information in a first table of a DB included in memory of the electronic device.

### [Advantageous Effects]

According to an embodiment of the disclosure, it is possible to maintain photographing date and time information of an image file having a file format in which metadata is unable to be stored and/or an image file in which metadata that does not include photographing date and time information is stored.

### [Brief Description of Drawings]

FIG. 1 is a block diagram of an electronic device in a network environment according to an embodiment.
FIG. 2 is a block diagram of an electronic device according to an embodiment.
FIG. 3 is a diagram illustrating an operation of generating a unique key of an image file in an electronic device according to an embodiment.
FIGS. 4A and 4B are diagrams illustrating an operation of maintaining photographing date and time information of an image file in an electronic device according to an embodiment.
FIGS. 5A and 5B are flowcharts illustrating an operation of storing photographing date and time information in an electronic device according to an embodiment.
FIG. 6 is a flowchart illustrating an operation of storing photographing date and time information in an electronic device according to an embodiment.
FIGS. 7A and 7B are flowcharts illustrating an operation of detecting photographing date and time information in an electronic device according to an embodiment.

### [Mode for Carrying out the Invention]

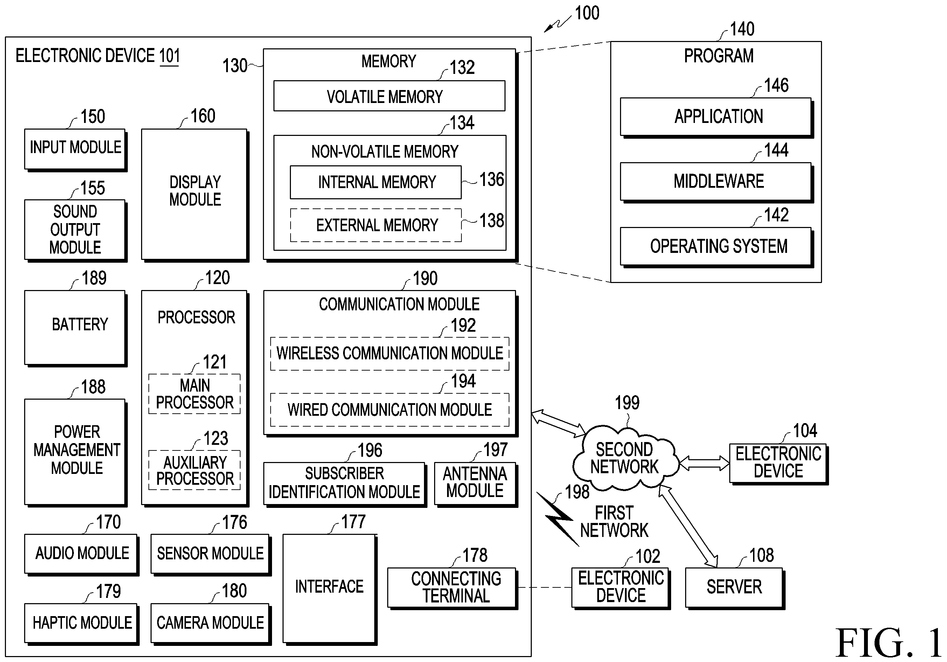

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

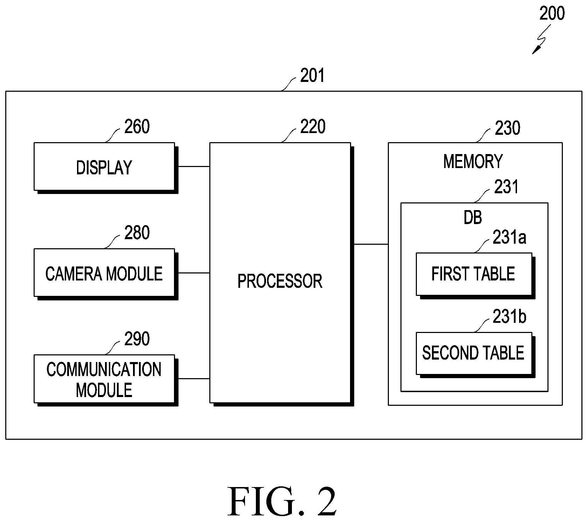

FIG. 2 is a block diagram 200 of an electronic device according to an embodiment.

Referring to FIG. 2, according to an embodiment, an electronic device 201 may include a processor 220, memory 230, a display 260, a camera 280, and a communication module 290.

At least some of the components of the electronic device 301 illustrated in FIG. 2 may be identical or similar to the components of the electronic device 101 in FIG. 1, and redundant descriptions thereof will be omitted below.

According to an embodiment, the processor 220 may be implemented substantially identically or similarly to the processor 120 in FIG. 1.

According to an embodiment, the memory 230 may store instructions that, when executed, may cause the processor 220 to generate, if an image file is identified as a first image file in which metadata is not stored when identifying generation of the image file, a unique key value and photographing date and time information of the first image file, and match and store the generated unique key value with the generated date and time information.

The metadata according to an embodiment may be data used to describe information about an image file. The metadata according to an embodiment may have a metadata structure or format specified according to the structure or format of the image file. The image file according to an embodiment may have a JPG or other file structure or format. The metadata of a JPG file according to an embodiment may have an EXIF structure (or format), and metadata of other file structures may have other structures (or formats).

According to an embodiment, the instructions may cause the processor 220, upon identifying the generation of the image file, to identify whether or not metadata is stored in the image file by scanning and/or parsing the image file and, if metadata is not stored in the image file, identify the image file as a first image file in which metadata is not stored.

According to an embodiment, the first image file in which metadata is not stored indicates an image file having a file format in which metadata is not stored, and may include, for example, a graphics interchange format (GIF) file and/or a portable network graphics (PNG) file.

According to an embodiment, the instructions may cause the processor 220 to apply a byte code corresponding to the content of the first image file to a hash algorithm to generate a unique key value.

According to an embodiment, the instructions may cause the processor 220, upon identifying generation date and time information of the first image file and modification date and time information of the first image, to generate one of the generation date and time information of the first image file or the modification date and time information of the first image, as the photographing date and time information of the first image, according to priority information.

According to an embodiment, the instructions may cause the processor 220, upon identifying the generation date and time information of the first image file, to generate the generation date and time information of the first image file as the photographing date and time information of the first image.

According to an embodiment, the instructions may cause the processor 220, upon identifying the modification date and time information of the first image file, to generate the modification date and time information of the first image file as the photographing date and time information of the first image.

According to an embodiment, the instructions may cause the processor 220 to detect generation date and time information or modification date and time information of the first image file, which is stored in a second table 231b included in the DB 231 of the memory 230, generate the same as the photographing date and time information of the first image file, and match and store the unique key value with the photographing date and time information generated for the first image file in a first table 231a included in the DB 231 of the memory 230.

According to an embodiment, the instructions may cause the processor 220 to detect generation date and time information or modification date and time information of the first image file, which is stored in a second DB (not shown) included in the memory 230, generate the same as the photographing date and time information of the first image file, and match and store the unique key value with the photographing date and time information generated for the first image file in a first DB (not shown) of the memory 230.

According to an embodiment, the instructions may cause the processor 220 to synchronize with a cloud and back up the unique key value and/or photographing date and time information generated for the first image file to the cloud. As the unique key value and/or photographing date and time information generated for the first image file are backed up to the cloud, even if the DB is updated by a policy such as a specific period or the like so that the unique key value and/or photographing date and time information generated for the first image file are deleted from the electronic device, the unique key value and/or photographing date and time information generated for the first image file backed up to the cloud may be used.

According to an embodiment, since the instructions cause the processor 220 to generate a unique key value by applying the byte code itself corresponding to the content of the image file to a hash algorithm, even if the first image file is edited or copied and moved to an external electronic device or within the electronic device, the unique key value remains unique, so the photographing date and time information generated for the first image file may be maintained without change.

According to an embodiment, the memory 230 may store instructions that, when executed, cause the processor 220, if the image file is identified as a second image file that does not include photographing date and time information in the metadata when identifying the generation of the image file, to generate a unique key value and photographing date and time information of the second image file, and match and store the generated unique key value with the generated date and time information.

According to an embodiment, the instructions may cause the processor 220, upon identifying the generation of the image file, to identify whether or not metadata is stored in the image file by scanning and/or parsing the image file, and if metadata is stored in the image file, identify whether or not photographing date and time information is included in the metadata, and if metadata is not stored in the image file, identify the image file as a second image file that does not include photographing date and time information in metadata.

In an embodiment, the second image file indicates an image file that has a file format in which metadata is stored but does not include photographing date and time information in the metadata, and may include, for example, a JPEG (Joint Photographic Experts Group) file that does not include photographing date and time information in metadata.

According to an embodiment, the instructions may cause the processor 220 to apply a byte code corresponding to the content of the second image file to a hash algorithm, thereby generating a unique key value.

According to an embodiment, the instructions may cause the processor 220, upon identifying generation date and time information of the second image file and modification date and time information of the second image, to generate one of the generation date and time information of the second image file or the modification date and time information of the second image as the photographing date and time information of the second image, based on priority information.

According to an embodiment, the instructions may cause the processor 220, upon identifying generation date and time information of the second image file, to generate the generation date and time information of the second image file as the photographing date and time information of the second image.

According to an embodiment, the instructions may cause the processor 220, upon identifying modification date and time information of the second image file, to generate the modification date and time information of the second image file as the photographing date and time information of the second image.

According to an embodiment, the instructions may cause the processor 220 to detect generation date and time information or modification date and time information of the second image file, which is stored in the second table 231b included in the DB 231 of the memory 230, generate the same as the photographing date and time information of the second image file, and match and store the unique key value with the photographing date and time information generated for the second image file in the first table 231a included in the DB 231 of the memory 230.

According to an embodiment, the instructions may cause the processor 220 to detect generation date and time information or modification date and time information of the second image file, which is stored in the second DB (not shown) included in the memory 230, generate the same as the photographing date and time information of the second image file, and match and store the unique key value with the photographing date and time information generated for the second image file in the first DB (not shown) of the memory 230.

According to an embodiment, the instructions may cause the processor 220 to synchronize with a cloud and back up the unique key value and/or the photographing date and time information generated for the second image file to the cloud. As the unique key value and/or photographing date and time information generated for the second image file are backed up to the cloud, even if the DB is updated by a policy such as a specific period or the like so that the unique key value and/or photographing date and time information generated for the second image file are deleted from the electronic device, the unique key value and/or photographing date and time information generated for the first image file backed up to the cloud may be used.

According to an embodiment, since the instructions cause the processor 220 to generate a unique key value by applying the byte code itself corresponding to the content of the image file to a hash algorithm, even if the second image file is edited or copied and moved to an external electronic device or within the electronic device, the unique key value remains unique, so the photographing date and time information generated for the second image file may be maintained without change.

According to an embodiment, the memory 230 may store instructions that, when executed, cause the processor 220, if the image file is identified as a third image file that includes photographing date and time information in metadata when identifying the generation of the image file, to detect and store the photographing date and time information included in the metadata of the third image file.

According to an embodiment, the instructions may cause the processor 220, upon identifying the generation of the image file, to identify whether or not metadata is stored in the image file by scanning and/or parsing the image file, and if metadata is stored in the image file, identify whether or not photographing date and time information is included in the metadata, and if the photographing date and time information is included in the metadata, identify the image file as a third image file that includes photographing date and time information in metadata.

According to an embodiment, the third image file indicates an image file having a file format in which metadata is stored and including photographing date and time information in the metadata, and may include, for example, a JPEG (Joint Photographic Experts Group) file including photographing date and time information in the metadata.

According to an embodiment, the instructions may cause the processor 220 to store the photographing date and time information detected as metadata from the third image file in the second table 231b among the first table 231a and the second table 231b included in the DB 231 of the memory 230.

According to an embodiment, the instructions may cause the processor 220 to store the photographing date and time information detected as metadata from the third image file in the second DB among the first DB (not shown) and the second DB (not shown) included in the memory 230.

According to an embodiment, the memory 230 may store instructions that, when executed, cause the processor 220 to detect a first image file and/or a second image file from among the image files stored in a file system of the memory when identifying a first state of the electronic device, generate unique key values and photographing date and time information for the first image file and/or the second image file, and match and store the generated unique key values with the generated photographing date and time information in the first table 231a of the DB 231 of the memory 230.

According to an embodiment, the first state of the electronic device may include at least one of a charging state of the electronic device or a state in which a display screen of the electronic device is turned off. Since the unique key values and photographing date and time information for the first image and/or the second image are generated and stored in the first state of the electronic device, the burden on the processing time of image files or video files with large file sizes may be reduced.

According to an embodiment, the instructions may cause the processor 220 to generate and store unique key values and photographing date and time information for the first image and/or the second image by distinguishing when the electronic device is in the first state or when identifying generation of a file, depending on the file size. For example, the instructions may cause the processor 220 to generate and store unique key values and photographing date and time information for the first image and/or the second image when identifying the generation of the file if the file size is less than or equal to a threshold value, and to generate and store unique key values and photographing date and time information for the first image and/or the second image when the electronic device is in the first state if the file size is greater than or equal to the threshold value.

According to an embodiment, the instructions may cause the processor 220 to control a first provider (e.g., a media provider) that manages a DB in which metadata is stored and a second provider (e.g., a specific media provider provided by a product company) that manages a DB in which information provided to a specific application among applications included in the electronic device is stored such that the DB managed by the first provider is synchronized with the DB managed by the second provider, thereby storing the same information.

According to an embodiment, the first provider (e.g., a media provider) may scan and/or parse image files stored in the file system of the memory 230 to manage a DB of the memory in which photographing date and time information of the image files are stored, and provide the photographing date and time information of the image files stored in the DB according to a request of at least one application included in the electronic device.

According to an embodiment, the second provider (e.g., a specific media provider provided by a product company) may provide specific information requested by a specific application among the applications included in the electronic device and update a separate DB, which is managed by the second provider, with the unique key value and photographing date and time information stored in the first table 231a of the DB 231 of the memory 230 managed by the first provider. Since the unique key value and photographing date and time information stored in the first table 231a of the DB 231 of the memory 230 are stored in the separate DB managed by the second provider, the specific application may request the photographing date and time information and specific information from the second provider, instead of requesting the photographing date and time information from the first provider and requesting the specific information from the second provider, respectively. In addition, even if the unique key value and photographing date and time information stored in the first table 231a of the DB 231 of the above memory 230 are deleted, the unique key value and photographing date and time information stored in the separate DB managed by the synchronized second provider may be used.

According to an embodiment, the memory 230 may store instructions that, when executed, cause the processor 220, upon identifying a request for displaying an image file, to sort at least one image file, based on photographing date and time information for at least one image file stored in the file system of the memory 230, and display the same on the display 260.

According to an embodiment, the instructions may cause the processor 220, upon identifying a first image file from among at least one image file stored in the file system of the memory 230 according to the request for displaying an image file, to apply a byte code corresponding to the content of the first image file to a hash algorithm to generate a unique key value. The instructions may cause the processor 220, upon identifying that the unique key value generated for the first image file is stored in the first table 231a of the DB of the memory 230, to detect photographing date and time information, which is stored to be matched with the unique key value generated for the first image file, from the first table 231a. The instructions may cause the processor 220, upon identifying that the unique key value generated for the first image file is stored in the first DB (not shown) of the memory 230, to detect photographing date and time information stored to be matched with the unique key value generated for the first image file, from the first DB.

According to an embodiment, the instructions may cause the processor 220, upon identifying a second image file from among at least one image file stored in the file system of the memory 230 according to the request for displaying an image file, to apply a byte code corresponding to the content of the second image file to a hash algorithm to generate a unique key value. The instructions may cause the processor 220, upon identifying that the unique key value generated for the second image file is stored in the first table 231a of the DB of the memory 230, to detect photographing date and time information stored to be matched with the unique key value generated for the second image file from the first table 231a. The instructions may cause the processor 220, upon identifying that the unique key value generated for the second image file is stored in the first DB (not shown) of the memory 230, to detect photographing date and time information stored to be matched with the unique key value generated for the second image file from the first DB.

According to an embodiment, the instructions may cause the processor 220, upon identifying a third image file from among at least one image file stored in the file system of the memory 230 according to the request for displaying an image file, to detect photographing date and time information of the third image file from the second table 231b of the DB 231 of the memory 230. The instructions may cause the processor 220, upon identifying the third image file from among at least one image file, to detect photographing date and time information of the third image file from the second DB (not shown) of the memory 230.

According to an embodiment, the instructions may cause the processor 220 to hash byte codes corresponding to the content of the first image file and/or the second file using various hash algorithms shown in <Table 1> below to generate a unique key value.

**[Table 1]**

| |
|---|
| file size: 246,271,827 byte |
| goodFastHash: 1602ms => 5b02dccbbb1c8ec1de4eae2571924f027bca958a2c0e9378a405ffefdaeb0136 |
| sha256: 268ms => 4688a198ecdd65746aaf22ea89194e9cdd53444be383ea4d143d06208ba38276 |
| md5: 633ms => cc7540d8708db660e8b7763ddb9323da |
| murmur3_128: 866ms => 23346183c4ef952dad7e134a5fad106f |
| murmur3 32: 632ms => 497e4779 |

The instructions may cause the processor 220 to generate a unique key value (e.g., 4688a198ecdd65746aaf22ea89194e9cdd53444be383ea4d143d06208ba 38276) in about 268ms in the case where an image file with a file size of 220MB is applied to a hash algorithm sha256, as shown in Table 1. Therefore, in general, a unique key may be generated without difficulty in the environment of an electronic device for an image file with a file size of 10MB. In addition, the instructions may cause the processor 220 to generate a unique key in the first state (e.g., a charging state or a state where the display screen of the electronic device is turned off) of the electronic device, instead of at the file generation time, for video files having various sizes.

According to an embodiment, the memory 230 may be implemented to be substantially identical or similar to the memory 130 in FIG. 1.

According to an embodiment, the memory 230 may include a DB 231, and the DB 231 may store a first table 231a and a second table 231b. The first table 231a may store unique key values for the first image and/or second image and photographing date and time information matched with the unique key values. The second table 231b may store photographing date and time information of the third image.

According to an embodiment, the memory 230 may include a first DB (not shown) and a second DB (not shown). The first DB (not shown) may store unique key values for the first image and/or second image and photographing date and time information matched with the unique key values. The second DB (not shown) may store photographing date and time information of the third image.

According to an embodiment, the display 260 may be implemented to be substantially identical or similar to the display module 160 in FIG. 1.

According to an embodiment, at least one image file stored in the file system of the memory 230 may be displayed on the display 260, based on the photographing date and time information, according to a request for displaying an image file.

According to an embodiment, the camera 280 may be implemented to be substantially identical or similar to the camera module 180 in FIG. 1.

According to an embodiment, the communication module 290 may be implemented to be substantially identical or similar to the communication module 190 in FIG. 1, and may include a plurality of communication circuits using different communication schemes.

According to an embodiment, the communication module 290 may include at least one of a wireless LAN module (not shown) and a short-range communication module (not shown), and the short-range communication module (not shown) may include a UWB (ultra-wideband) communication module, a Wi-Fi communication module, an NFC communication module, a Bluetooth legacy communication module, and/or a BLE communication module.

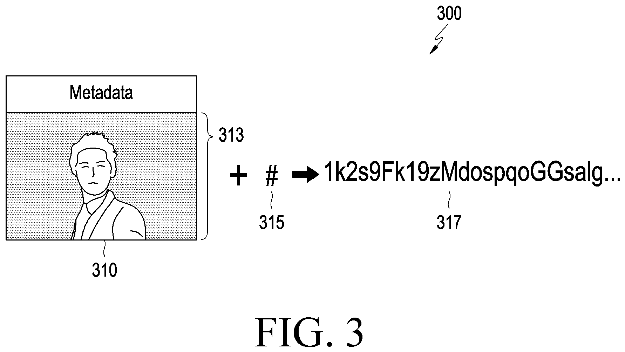

FIG. 3 is a diagram 300 illustrating an operation of generating a unique key of an image file in an electronic device according to an embodiment.

Referring to FIG. 3, an electronic device (e.g., the electronic device 101 in FIG. 1 and/or the electronic device 201 in FIG. 2) may apply a byte code 313 corresponding to the content of the second image file 310 that does not include photographing date and time information in metadata to a hash function 315 to generate a unique key value 317 (1k2s9Fk19zMdos...) of the second image file 310. The electronic device may store the generated unique key value in a first table (e.g., the first table 231a in FIG. 2) of a DB (e.g., the DB 231 in FIG. 2) of memory (e.g., the memory 230 in FIG. 2) of the electronic device as shown in Table 2 below.

**[Table 2]**

| Unique Key | Date-taken | GPS Coordinate | ... |
|---|---|---|---|
| 1k2s9Fk19zMdos... | 2022-04-01 16:01 +09:00 | 123.456 / 789.012 | ... |
| d192flkfj10939fj... | 2022-04-01 16:02 +09:00 | 214.590 / 21.907 | ... |
| zZod8f020112... | 2020-12-06 00:01 +09:00 | 782.354 / 907.413 | ... |
| Udkro02dfkKdf9.. | 2021-01-30 09:02 +09:00 | 213.978 / 657.290 | ... |
| kluJHkgLGl9090J... | 2022-05-04 16:01 +09:00 | 68.478 / 856.54 | ... |
| ... | ... | ... | ... |

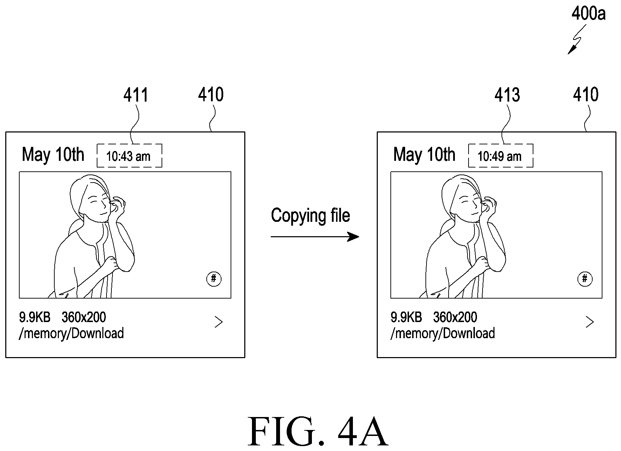

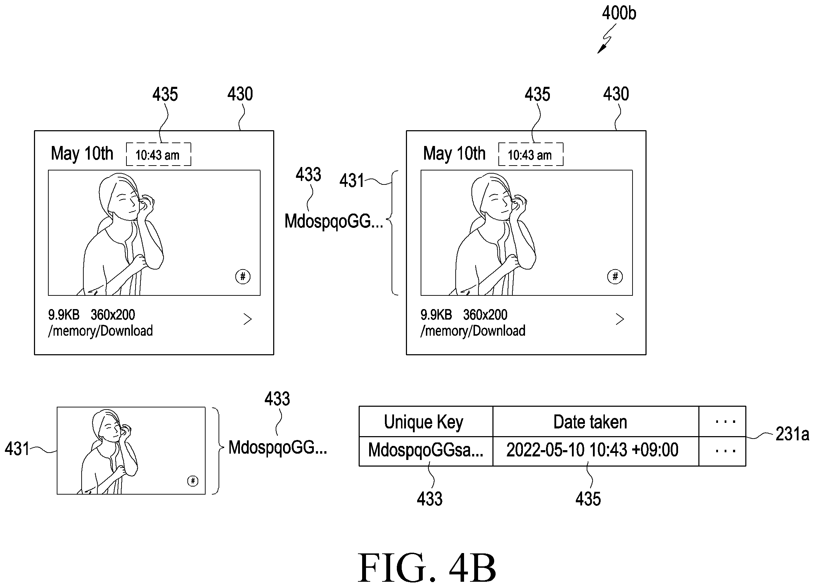

As shown in Table 2, the electronic device may store photographing date and time information to be matched with unique keys as in the first table and, in addition to the photographing date and time information, further store information related to the photographing of the first image file or second image file, such as GPS coordinate information indicating photographing location information. FIGS. 4A and 4B are diagrams 400a to 400b illustrating an operation of maintaining photographing date and time information of an image file in an electronic device according to an embodiment.

Referring to FIG. 4A, if a first image file 410 in which metadata is not stored is captured (generated) at 10:43 AM on May 10, 2022, a general electronic device may sort and display the first image file 410, based on generation date and time information (e.g., 10:43 AM on May 10, 2022) 411 of the first image file 410. If the first image file 410 is copied, the electronic device may sort and display the first image file 410, based on date and time information (e.g., 10:49 AM on May 10, 2022) 413 of copying the first image file 410.

Referring to FIG. 4B, if a first image file 430 in which metadata is not stored is captured (generated) at 10:43 AM on May 10, 2022, an electronic device (e.g., the electronic device 101 in FIG. 1 and/or the electronic device 201 in FIG. 2) according to the disclosure may apply a byte code 431 corresponding to the content of the first image file to a hash algorithm, using a hash algorithm, to generate a unique key value 433, generate generation date and time information (e.g., 10:43 AM on May 10, 2022) of the first image file 430 as photographing date and time information 435 of the first image file, match the generated unique key value 433 with the photographing date and time information 435, and store the same in a first table (e.g., the first table 231a in FIG. 2) of the DB of the electronic device, so that the first image file 430 may be sorted and displayed based on the photographing date and time information 435 of the first image file 430. In the case where the first image file 430 is copied, the electronic device may generate a unique key value 433 by hashing a byte code 431 corresponding to the content of the first image file 430 using a hash algorithm, detect photographing date and time information 435 stored to be matched with the unique key value 433 from the first table (e.g., the first table231a in FIG. 3) of the DB of the electronic device, and sort and display the first image file 430, based on the same photographing date and time information 435 as that before copying the first image file 430.

An electronic device (the electronic device 101 in FIG. 1 or the electronic device 201 in FIG. 2) may include memory (the memory 130 in FIG. 1 or the memory 230 in FIG. 2) including a DB (the DB 231 in FIG. 2) configured to store a first table (the second table 231a in FIG. 2) in which unique key values and photographing date and time information of image files are stored to be matched, and a processor (the processor 120 in FIG. 1 or the processor 220 in FIG. 2).

The memory according to an embodiment may store instructions that, when executed, cause the processor to generate, based on identifying a first image file in which metadata is not stored or a second image file in which metadata does not include photographing date and time information, a unique key value for the first image file or the second image file.

The memory according to an embodiment may store instructions that, when executed, cause the processor to generate date and time information related to the first image file or the second image file as photographing date and time information, match the unique key value with the generated photographing and date information, and store the same in the first table of the DB.

The memory may store instructions that, when executed, cause the processor, upon identifying generation of an image file, to identify whether the generated image file is the first image file or the second image file. The memory may store instructions that, when executed, cause the processor to, upon identifying a first state of the electronic device, identify whether it is the first image file or the second image file. According to an embodiment, the first state of the electronic device may include at least one of a charging state of the electronic device or a state in which a display screen of the electronic device is turned off.

The memory according to an embodiment may store instructions that, when executed, cause the processor to generate the unique key value using a byte code corresponding to content of the first image file or the second image file. The processor according to an embodiment may store instructions to generate the unique key value by applying a byte code corresponding to the content of the first image file or the second image file to a hash algorithm. The memory according to an embodiment may store instructions that, when executed, cause the processor, upon identifying generation date and time information and modification date and time information of the first image file or the second image file as the date and time information related to the first image file or the second image file, to generate the generation date and time information or the modification date and time information of the first image file or the second image file as the photographing date and time information of the first image file or the second image file, based on priority information. The DB according to an embodiment may include a second table in which photographing date and time information is stored.

The memory according to an embodiment may store instructions that, when executed, cause the processor, upon identifying a third image file in which metadata including photographing date and time information is stored in the image file, to store the photographing date and time information of the third image file in the second table. The memory according to an embodiment may store instructions that, when executed, cause the processor to generate a unique key value for the first image file or the second image file, based on a request for displaying the first image file or the second image file, and, if the unique key value exists in the first table of the DB, detect photographing date and time information stored to be matched with the unique key value. The memory according to an embodiment may store instructions that, when executed, cause the processor detect photographing date and time information of the third image file from the second table of the DB, based on a request for displaying the third image file.

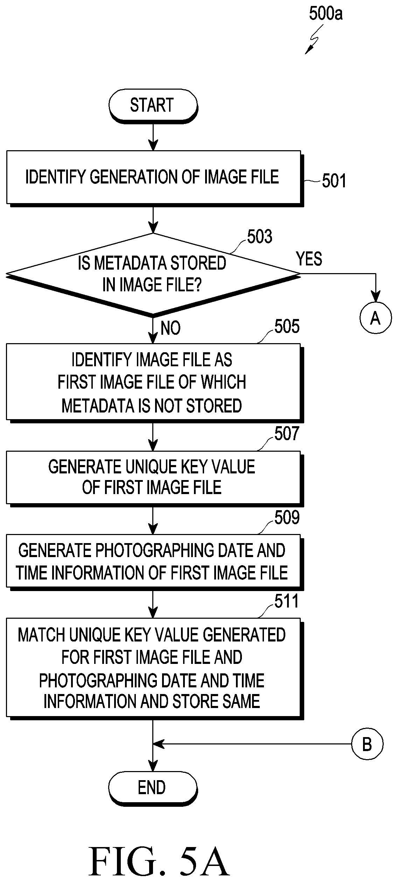

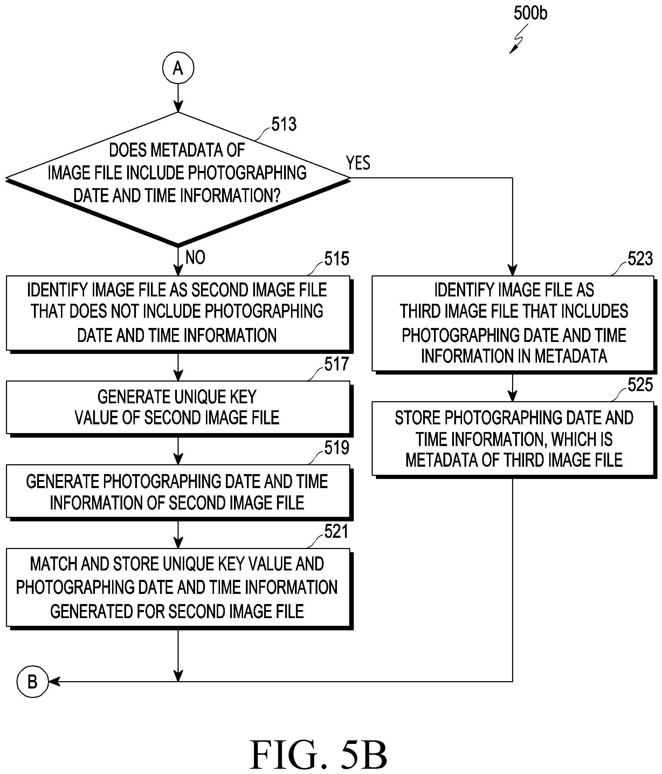

FIGS. 5A to 5B are flowcharts 500a to 500b illustrating an operation of storing photographing date and time information in an electronic device according to an embodiment. The operations of storing the photographing date and time may include operations 501 to 525. In the following embodiments, the operations may be performed sequentially, but are not necessarily performed sequentially. For example, the sequence of the operations may vary, at least two operations may be performed in parallel, or other operations may be added thereto.

In operation 501, an electronic device (e.g., the electronic device 101 in FIG. 1 and/or the electronic device 201 in FIG. 2) may identify generation of an image file.

In operation 503, the electronic device (e.g., the electronic device 101 in FIG. 1 and/or the electronic device 201 in FIG. 2) may identify whether or not metadata is stored in the image file.

According to an embodiment, the electronic device may identify whether or not metadata is stored in the image file, based on the scanning and/or parsing operation of the image file.

If it is identified that metadata is not stored in the image file in operation 503, the electronic device may identify the image file as a first image file in which metadata is not stored in operation 505.

According to an embodiment, the first image file in which metadata is not stored indicates an image file having a file format in which metadata is not stored, and may include, for example, a GIF (Graphics Interchange Format) file and/or a PNG (Portable Network Graphics) file.

In operation 507, the electronic device (e.g., the electronic device 101 in FIG. 1 and/or the electronic device 201 in FIG. 2) may generate a unique key value of the first image file.

According to an embodiment, the electronic device may generate the unique key value by applying a byte code corresponding to the content of the first image file to a hash algorithm.

In operation 509, the electronic device (e.g., the electronic device 101 in FIG. 1 and/or the electronic device 201 in FIG. 2) may generate photographing date and time information of the first image file.

According to an embodiment, upon identifying generation date and time information of the first image file and modification date and time information of the first image file, the electronic device may generate one of the generation date and time information of the first image file or the modification date and time information of the first image file, as the photographing date and time information of the first image, according to priority information.

According to an embodiment, upon identifying the generation date and time information of the first image file, the electronic device may generate the generation date and time information of the first image file as the photographing date and time information of the first image file.

According to an embodiment, upon identifying the modification date and time information of the first image file, the electronic device may generate the modification date and time information of the first image file as the photographing date and time information of the first image.

In operation 511, the electronic device (e.g., the electronic device 101 in FIG. 1 and/or the electronic device 201 in FIG. 2) may match and store the unique key value with the photographing date and time information generated for the first image file.

According to an embodiment, the electronic device may match and store the unique key value with photographing date and time information generated for the first image file in a first table (e.g., the first table 231a in FIG. 2) among the first table and a second table (e.g., the second table 231b in FIG. 2) included in a DB (e.g., the DB 231 in FIG. 2) of memory (e.g., the memory 230 in FIG. 2).

According to an embodiment, the electronic device may match and store the unique key value with photographing date and time information generated for the first image file in a first DB among the first DB and a second DB included in the memory (e.g., the memory 230 in FIG. 2).

According to an embodiment, the electronic device may synchronize with a cloud and back up the unique key value and/or photographing date and time information generated for the first image file to the cloud.

If it is identified that metadata is stored in the image file in operation 503, the electronic device may identify whether or not the metadata of the image file includes photographing date and time information in operation 513.

If it is identified that the metadata of the image file does not include photographing date and time information in operation 513, the electronic device may identify the image file as a second image file that does not include photographing date and time information in the metadata in operation 515.

In an embodiment, the second image file indicates an image file that has a file format in which metadata is stored but does not include photographing date and time information in the metadata, and may include, for example, a JPEG (Joint Photographic Experts Group) file that does not include photographing date and time information in the metadata.

In operation 517, the electronic device (e.g., the electronic device 101 in FIG. 1 and/or the electronic device 201 in FIG. 2) may generate a unique key value of the second image file.

According to an embodiment, the electronic device may generate the unique key value by applying a byte code corresponding to the content of the second image file to a hash algorithm.

In operation 519, the electronic device (e.g., the electronic device 101 in FIG. 1 and/or the electronic device 201 in FIG. 2) may generate photographing date and time information of the second image file.

According to an embodiment, upon identifying generation date and time information of the second image file and modification date and time information of the second image file, the electronic device may generate one of the generation date and time information of the second image file or the modification date and time information of the second image file as the photographing date and time information of the second image according to priority information.

According to an embodiment, upon identifying generation date and time information of the second image file, the electronic device may generate the generation date and time information of the second image file as the photographing date and time information of the second image.

According to an embodiment, upon identifying modification date and time information of the second image file, the electronic device may generate the modification date and time information of the second image file as the photographing date and time information of the second image file.

In operation 521, the electronic device (e.g., the electronic device 101 in FIG. 1 and/or the electronic device 201 in FIG. 2) may match and store the unique key value with the photographing date and time information generated for the second image file.

According to an embodiment, the electronic device may match and store the unique key value with photographing date and time information generated for the second image file in the first table among the first table (e.g., the first table 231a in FIG. 2) and the second table (e.g., the second table 231b in FIG. 2) included in the DB (e.g., the DB 231 in FIG. 2) of the memory (e.g., the memory 230 in FIG. 2).

According to an embodiment, the electronic device may match and store the unique key value with photographing date and time information generated for the second image file in the first DB among the first DB and the second DB included in the memory (e.g., the memory 230 in FIG. 2).

According to an embodiment, the electronic device may synchronize with a cloud and back up the unique key value and/or photographing date and time information generated for the second image file to the cloud.

If it is identified that the metadata of the image file includes photographing date and time information in operation 513, the electronic device identify the image file as a third image file that includes photographing date and time information in the metadata in operation 523.

According to an embodiment, the third image file indicates an image file having a file format in which metadata is stored and including photographing date and time information in the metadata, and may include, for example, a JPEG (Joint Photographic Experts Group) file including photographing date and time information in the metadata.

In operation 525, the electronic device (e.g., the electronic device 101 in FIG. 1 and/or the electronic device 201 in FIG. 2) may store the photographing date and time information, which is metadata of the third image file.

According to an embodiment, the electronic device may store the photographing date and time information detected as metadata from the third image file in the second table among the first table (e.g., the first table 231a in FIG. 2) and the second table (e.g., the second table 231b in FIG. 2) included in the DB (e.g., the DB 231 in FIG. 21) of the memory (e.g., the memory 230 in FIG. 2).

According to an embodiment, the processor 220 may store the photographing date and time information detected as metadata from the third image file in the second DB among the first DB and the second DB included in the memory (e.g., the memory 230 in FIG. 2).

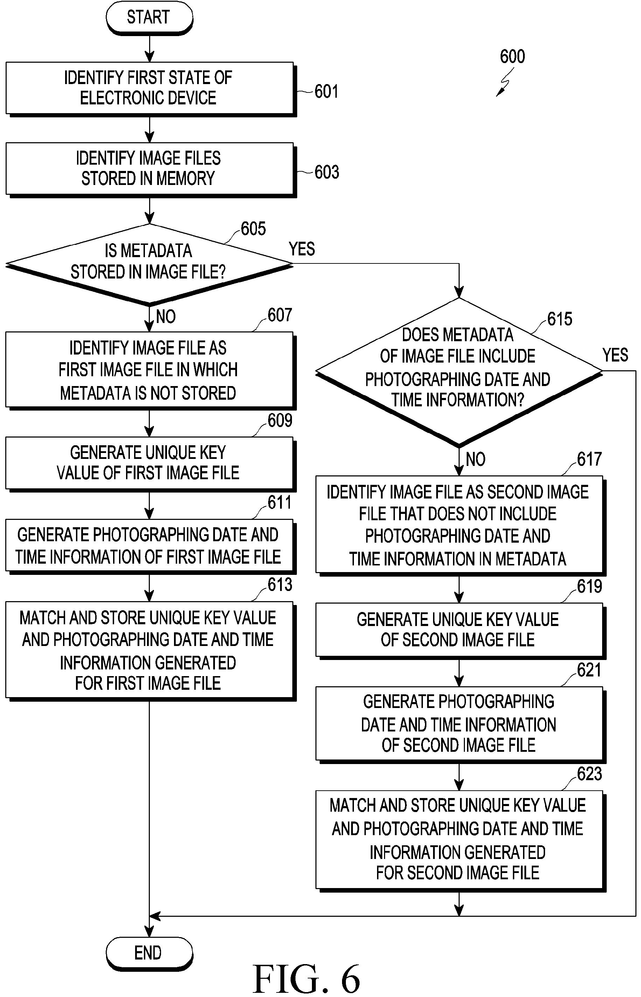

FIG. 6 is a flowchart 600 illustrating an operation of storing photographing date and time information in an electronic device according to an embodiment. The operations of storing the photographing date and time may include operations 601 to 623. In the following embodiments, the operations may be performed sequentially, but are not necessarily performed sequentially. For example, the sequence of the operations may vary, at least two operations may be performed in parallel, or other operations may be added thereto.

In operation 601, an electronic device (e.g., electronic device 101 in FIG. 1 and/or electronic device 201 in FIG. 2) may identify a first state of the electronic device.

According to an embodiment, the first state of the electronic device may include at least one of a charging state of the electronic device or a state in which a display screen of the electronic device is turned off. Since the unique key values and photographing date and time information for the first image and/or the second image are generated and stored in the first state of the electronic device, the burden on the processing time of image files (e.g., video files) with large file sizes may be reduced.

In operation 603, the electronic device (e.g., the electronic device 101 in FIG. 1 and/or the electronic device 201 in FIG. 2) may identify image files stored in memory (e.g., the memory 230 in FIG. 2).

In operation 605, the electronic device (e.g., the electronic device 101 in FIG. 1 and/or the electronic device 201 in FIG. 2) may identify whether or not metadata is stored in the image file.

If it is identified that metadata is not stored in the image file in operation 605, the electronic device may identify the image file as a first image file in which metadata is not stored in operation 607.

According to an embodiment, the electronic device may identify whether or not metadata is stored in the image files, based on the scanning and/or parsing operation of the image file.

According to an embodiment, the first image file in which metadata is not stored indicates an image file having a file format in which metadata is not stored, and may include, for example, a GIF (Graphics Interchange Format) file and/or a PNG (Portable Network Graphics) file.

In operation 609, the electronic device (e.g., the electronic device 101 in FIG. 1 and/or the electronic device 201 in FIG. 2) may generate a unique key value of the first image file.

According to an embodiment, the electronic device may generate the unique key value by applying a byte code corresponding to the content of the first image file to a hash algorithm.

In operation 611, the electronic device (e.g., the electronic device 101 in FIG. 1 and/or the electronic device 201 in FIG. 2) may generate photographing date and time information of the first image file.

According to an embodiment, upon identifying generation date and time information of the first image file and modification date and time information of the first image file, the electronic device may generate one of the generation date and time information of the first image file or the modification date and time information of the first image file as the photographing date and time information of the first image file according to priority information.

According to an embodiment, upon identifying generation date and time information of the first image file, the electronic device may generate the generation date and time information of the first image file as the photographing date and time information of the first image file.

According to an embodiment, upon identifying modification date and time information of the first image file, the electronic device may generate the modification date and time information of the first image file as the photographing date and time information of the first image.

In operation 613, the electronic device (e.g., the electronic device 101 in FIG. 1 and/or the electronic device 201 in FIG. 2) may match and store the unique key value with the photographing date and time information generated for the first image file.

According to an embodiment, the electronic device may match and store the unique key value with photographing date and time information generated for the first image file in a first table (e.g., the first table 231a in FIG. 2) among the first table and a second table (e.g., the second table 231b in FIG. 2) included in a DB (e.g., the DB 231 in FIG. 2) of memory (e.g., the memory 230 in FIG. 2).

According to an embodiment, the electronic device may match and store the unique key value with photographing date and time information generated for the first image file in a first DB among the first DB and a second DB included in the memory (e.g., the memory 230 in FIG. 2).

According to an embodiment, the electronic device may synchronize with a cloud and back up the unique key value and/or photographing date and time information generated for the first image file to the cloud.

If it is identified that metadata is stored in the image file in operation 605, the electronic device may identify whether or not the metadata of the image file includes photographing date and time information in operation 615.

If it is identified that the metadata of the image file does not include photographing date and time information in operation 615, the electronic device may identify the image file as a second image file that does not include photographing date and time information in the metadata in operation 617.

According to an embodiment, the second image file indicates an image file that has a file format in which metadata is stored but does not include photographing date and time information in the metadata, and may include, for example, a JPEG (Joint Photographic Experts Group) file that does not include photographing date and time information in the metadata.

In operation 619, the electronic device (e.g., the electronic device 101 in FIG. 1 and/or the electronic device 201 in FIG. 2) may generate a unique key value of the second image file.

According to an embodiment, the electronic device may generate a unique key value by applying a byte code corresponding to the content of the second image file to a hash algorithm.

In operation 621, the electronic device (e.g., the electronic device 101 in FIG. 1 and/or the electronic device 201 in FIG. 2) may generate photographing date and time information of the second image file.

According to an embodiment, upon identifying generation date and time information of the second image file and modification date and time information of the second image file, the electronic device may generate one of the generation date and time information of the second image file or the modification date and time information of the second image file as the photographing date and time information of the second image according to priority information.

According to an embodiment, upon identifying the generation date and time information of the second image file, the electronic device may generate the generation date and time information of the second image file as the photographing date and time information of the second image file.

According to an embodiment, upon identifying modification date and time information of the second image file, the electronic device may generate the modification date and time information of the second image file as the photographing date and time information of the second image.

In operation 623, the electronic device (e.g., the electronic device 101 in FIG. 1 and/or the electronic device 201 in FIG. 2) may match and store the unique key value with the photographing date and time information generated for the second image file.

According to an embodiment, the electronic device may match and store the unique key value with photographing date and time information generated for the second image file in the first table among the first table (e.g., the first table 231a in FIG. 2) and the second table (e.g., the second table 231b in FIG. 2) included in the DB (e.g., the DB 231 in FIG. 2) of the memory (e.g., the memory 230 in FIG. 2).

According to an embodiment, the electronic device may match and store the unique key value with photographing date and time information generated for the second image file in the first DB among the first DB and the second DB included in the memory (e.g., the memory 230 in FIG. 2).

According to an embodiment, the electronic device may synchronize with a cloud and back up the unique key value and/or photographing date and time information generated for the second image file to the cloud.

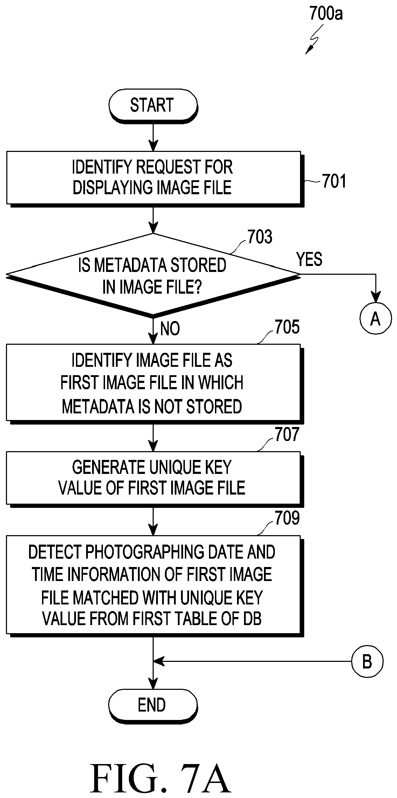

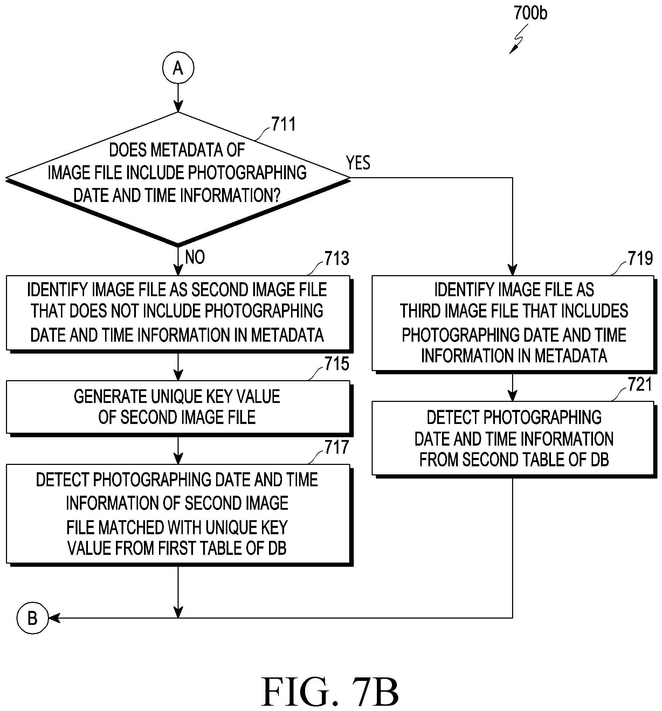

FIGS. 7A and 7B are flowcharts 700a to 700b illustrating an operation of detecting photographing date and time information in an electronic device according to an embodiment. The operations of detecting the photographing date and time may include operations 701 to 721. In the following embodiment, the operations may be performed sequentially, but are not necessarily performed sequentially. For example, the sequence of the operations may vary, at least two operations may be performed in parallel, or other operations may be added thereto.

In operation 701, the electronic device (e.g., the electronic device 101 in FIG. 1 and/or the electronic device 201 in FIG. 2) may identify a request for displaying an image file.

In operation 703, the electronic device (e.g., the electronic device 101 in FIG. 1 and/or the electronic device 201 in FIG. 2) may identify whether or not metadata is stored in the image file.

According to an embodiment, the electronic device may identify whether or not metadata is stored in the image file, based on a scanning and/or parsing operation of the image file.

If it is identified that metadata is not stored in the image file in operation 703, the electronic device may identify the image file as a first image file in which metadata is not stored in operation 705.

According to an embodiment, the first image file in which metadata is not stored indicates an image file having a file format in which metadata is not stored, and may include, for example, a GIF (Graphics Interchange Format) file and/or a PNG (Portable Network Graphics) file.

In operation 707, the electronic device (e.g., the electronic device 101 in FIG. 1 and/or the electronic device 201 in FIG. 2) may generate a unique key value of the first image file.

According to an embodiment, the electronic device may generate a unique key value by applying a byte code corresponding to the content of the first image file to a hash algorithm.

In operation 709, the electronic device (e.g., the electronic device 101 in FIG. 1 and/or the electronic device 201 in FIG. 2) may detect photographing date and time information of the first image file matched with the unique key value from the first table of the DB.

According to an embodiment, upon identifying that the unique key value generated for the first image file is stored in the first table (e.g., the first table 231a in FIG. 2) of the DB (e.g., the DB 231 in FIG. 2) of the memory (e.g., the memory 230 in FIG. 2), the electronic device may detect photographing date and time information, which is stored to be matched with the unique key value generated for the first image file, from the first table.

According to an embodiment, upon identifying that the unique key value generated for the first image file is stored in the first DB among the first DB and the second DB of the memory (e.g., the memory 230 in FIG. 2), the electronic device may detect photographing date and time information stored to be matched with the unique key value generated for the first image file, from the first DB.

According to an embodiment, the electronic device may sort the first image, based on the detected photographing date and time information, and display the same on the display (e.g., the display 260 in FIG. 2).

If it is identified that metadata is stored in the image file in operation 703, the electronic device may identify whether or not the metadata of the image file includes photographing date and time information in operation 711.

If it is identified that the metadata of the image file does not include photographing date and time information in operation 711, the electronic device may identify the image file as a second image file that does not include photographing date and time information in the metadata in operation 713.

According to an embodiment, the second image file indicates an image file that has a file format in which metadata is stored but does not include photographing date and time information in the metadata, and may include, for example, a JPEG (Joint Photographic Experts Group) file that does not include photographing date and time information in the metadata

In operation 715, the electronic device (e.g., the electronic device 101 in FIG. 1 and/or the electronic device 201 in FIG. 2) may generate a unique key value of the second image file.

According to an embodiment, the electronic device may generate the unique key value by applying a byte code corresponding to the content of the second image file to a hash algorithm.

In operation 717, the electronic device (e.g., the electronic device 101 in FIG. 1 and/or the electronic device 201 in FIG. 2) may detect the photographing date and time information of the second image file matched with the unique key value from the first table of the DB.

According to an embodiment, upon identifying that the unique key value generated for the second image file is stored in the first table (e.g., the first table 231a in FIG. 2) of the DB (e.g., the DB 231 in FIG. 3) of the memory (e.g., the memory 230 in FIG. 2), the electronic device may detect photographing date and time information, which is stored to be matched with the unique key value generated for the second image file, from the first table.

According to an embodiment, upon identifying that the unique key value generated for the second image file is stored in the first DB among the first DB and the second DB of the memory (e.g., the memory 230 in FIG. 2), the electronic device may detect photographing date and time information stored to be matched with the unique key value generated for the second image file, from the first DB

According to an embodiment, the electronic device may sort the second image, based on the detected photographing date and time information, and display the same on the display (e.g., the display 260 in FIG. 2).

If it is identified that the metadata of the image file includes photographing date and time information in operation 711, the electronic device identify the image file as a third image file that includes photographing date and time information in the metadata in operation 719.

According to an embodiment, the third image file indicates an image file having a file format in which metadata is stored and including photographing date and time information in the metadata, and may include, for example, a JPEG (Joint Photographic Experts Group) file including photographing date and time information in the metadata.

In operation 721, the electronic device (e.g., electronic device 101 in FIG. 1 and/or electronic device 201 in FIG. 2) may detect photographing date and time information from a second table of the DB.

According to an embodiment, the electronic device may detect photographing date and time information of the third image file from the second table (e.g., the second table 231b in FIG. 2) of the DB (e.g., the DB 231 in FIG. 2) of the memory (e.g., the memory 230 in FIG. 2).

According to an embodiment, upon identifying the third image file from among at least one image file, the electronic device may detect photographing date and time information of the third image file from the second DB among the first DB and the second DB of the memory (e.g., the memory 230 in FIG. 2).

A method for managing photographing date and time of an image file in an electronic device according to an embodiment may include generating, based on identifying a first image file in which metadata is not stored or a second image file in which metadata does not include photographing date and time information, a unique key value for the first image file or the second image file.

The method according to an embodiment may include generating date and time information related to the first image file or the second image file as photographing date and time information.

The method according to an embodiment may include matching the unique key value and the generated photographing and date information and storing the same in a first table of a DB included in memory of the electronic device.

The method according to an embodiment may include, upon identifying generation of an image file, identifying whether the generated image file is the first image file or the second image file.

The method according to an embodiment may include may include, upon identifying a first state of the electronic device, identifying whether it is the first image file or the second image file.

In the method according to an embodiment, the first state of the electronic device may include at least one of a charging state of the electronic device or a state in which a display screen of the electronic device is turned off.

The method according to an embodiment may include generating the unique key value using a byte code corresponding to content of the first image file or the second image file.

The method according to an embodiment may include generating the unique key value by applying a byte code corresponding to the content of the first image file or the second image file to a hash algorithm.

The method according to an embodiment may include, upon identifying generation date and time information and modification date and time information of the first image file or the second image file as the date and time information related to the first image file or the second image file, generating the generation date and time information or the modification date and time information of the first image file or the second image file as the photographing date and time information of the first image file or the second image file, based on priority information.

The method according to an embodiment may include, upon identifying a third image file in which metadata including photographing date and time information is stored in the image file, storing the photographing date and time information of the third image file in the second table of the DB in which photographing date and time information is stored.

The method according to an embodiment may include generating a unique key value for the first image file or the second image file, based on a request for displaying the first image file or the second image file.

The method according to an embodiment may include, if the unique key value exists in the first table of the DB, detecting photographing date and time information stored to be matched with the unique key value.

The method according to an embodiment may include detecting photographing date and time information of the third image file from the second table of the DB, based on a request for displaying the third image file.

The electronic device according to an embodiment may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that an embodiment of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with an embodiment of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

An embodiment as set forth herein may be implemented as software (e.g., the program 140) including one or more instructions that are stored in a storage medium (e.g., internal memory 136 or external memory 138) that is readable by a machine (e.g., the electronic device 101 or the electronic 301). For example, a processor (e.g., the processor 520) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to an embodiment of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities, and some of the multiple entities may be separately disposed in different components. According to an embodiment, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to an embodiment, operations performed by the module, the program, or another component may be carried out sequentially, in parallel, repeatedly, or heuristically, or one or more of the operations may be executed in a different order or omitted, or one or more other operations may be added.

According to an embodiment of the disclosure, a non-volatile storage medium may store instructions that, when executed by an electronic device, cause the electronic device to at least one operation, and the at least one operation may include generating, based on identifying a first image file in which metadata is not stored or a second image file in which metadata does not include photographing date and time information, a unique key value for the first image file or the second image file, generating date and time information related to the first image file or the second image file as photographing date and time information, matching and storing the unique key value with the generated photographing and date information in a first table of a DB included in memory of the electronic device.

## Claims

1. An electronic device comprising:
memory (130 in FIG. 1 and 230 in FIG. 2) comprising a DB (231 in FIG. 2) configured to store a first table (231a in FIG. 2) in which unique key values and photographing date and time information of image files are stored to be matched; and
a processor (120 in FIG. 1 or 220 in FIG. 2),
wherein the memory stores instructions that, when executed, cause the processor to:
generate, based on identifying a first image file in which metadata is not stored or a second image file in which metadata does not include photographing date and time information, a unique key value for the first image file or the second image file; and
generate date and time information related to the first image file or the second image file as photographing date and time information, match and store the unique key value with the generated photographing and date information in the first table of the DB.

2. The electronic device of claim 1, wherein the instructions cause the processor to, upon identifying generation of an image file, to identify whether the generated image file is the first image file or the second image file.

3. The electronic device of claim 1 or claim 2, wherein the instructions cause the processor to, upon identifying a first state of the electronic device, identify whether it is the first image file or the second image file.

4. The electronic device of any one of claims 1 to 3, wherein the first state of the electronic device comprises at least one of a charging state of the electronic device or a state in which a display screen of the electronic device is turned off.

5. The electronic device of any one of claims 1 to 4, wherein the instructions cause the processor to generate the unique key value using a byte code corresponding to content of the first image file or the second image file.

6. The electronic device of any one of claims 1 to 5, wherein the instructions cause the processor to generate the unique key value by applying a byte code corresponding to the content of the first image file or the second image file to a hash algorithm.

7. The electronic device of any one of claims 1 to 6, wherein the instructions cause the processor to, upon identifying generation date and time information and modification date and time information of the first image file or the second image file as the date and time information related to the first image file or the second image file, generate the generation date and time information or the modification date and time information of the first image file or the second image file as the photographing date and time information of the first image file or the second image file, based on priority information.

8. The electronic device of any one of claims 1 to 7, wherein the DB comprises a second table in which photographing date and time information is stored, and
wherein the processor is configured to, upon identifying a third image file in which metadata including photographing date and time information is stored in the image file, store the photographing date and time information of the third image file in the second table.

9. The electronic device of any one of claims 1 to 8, wherein the instructions cause the processor to:
generate a unique key value for the first image file or the second image file, based on a request for displaying the first image file or the second image file; and
in case that the unique key value exists in the first table of the DB, detect photographing date and time information stored to be matched with the unique key value.

10. The electronic device according to any one of claims 1 to 9, wherein the instructions cause the processor to detect photographing date and time information of the third image file from the second table of the DB, based on a request for displaying the third image file.

11. A method for managing photographing date and time of an image file in an electronic device, the method comprising:
generating, based on identifying a first image file in which metadata is not stored or a second image file in which metadata does not include photographing date and time information, a unique key value for the first image file or the second image file;
generating date and time information related to the first image file or the second image file as photographing date and time information; and
matching and storing the unique key value and the generated photographing with date information in a first table of a DB included in memory of the electronic device.

12. The method of claim 11, further comprising, upon identifying generation of an image file, identifying whether the generated image file is the first image file or the second image file.

13. The method of claim 11 or 12, further comprising, upon identifying a first state of the electronic device, identifying whether it is the first image file or the second image file.

14. The method of any one of claims 11 to 13, wherein the first state of the electronic device comprises at least one of a charging state of the electronic device or a state in which a display screen of the electronic device is turned off.

15. The method of any one of claims 11 to 14, further comprising generating the unique key value using a byte code corresponding to content of the first image file or the second image file.
